# DEMANDE DE BREVET EUROPEEN

(11) **EP 4 144 464 A1**
(43) Date de publication de la demande: **08.03.2023**
(21) Numéro de dépôt: 22193344.3
(22) Date de dépôt: 31.08.2022
(51) Int. Cl.: B22F 10/28, B22F 10/43, B22F 10/62, C22C 1/04, B33Y 40/20

(54) **PROCÉDÉ DE FABRICATION D'UNE PIÈCE EN MÉTAL NOBLE ET INSTALLATION POUR METTRE EN OEUVRE LE PROCÉDÉ**

(30) Priorité: 01.09.2021 FR 2109121
(71) Demandeur: Franceclat, 75008 Paris (FR)
(72) Inventeur: SUTER, Emmanuel, 25960 Deluz (FR); FONTAINE, Sébastien, 70700 Oiselay et Grachaux (FR)
(74) Mandataire: Santarelli

(57) **Abrégé**

L'invention concerne un procédé de fabrication d'une pièce comportant des étapes de : fourniture d'au moins une plaquette en un matériau soluble dans une substance prédéterminée ; fabrication additive de la pièce, en un matériau insoluble dans la substance, sur la plaquette ; et immersion de la plaquette supportant la pièce, dans la substance, durant laquelle la plaquette se dissout dans la substance. Elle concerne aussi une installation pour mettre en œuvre le procédé.

## Description

L'invention concerne un procédé de fabrication d'une pièce en métal noble.

Elle concerne plus particulièrement un procédé de fabrication additive d'une pièce en métal noble, notamment en alliage d'or ou de platine.

Elle concerne également une installation configurée pour mettre en oeuvre le procédé. Un procédé habituel de fabrication additive d'une pièce consiste en un ajout de poudre étalée couche par couche sur un plateau ; une source laser parcourt au moins une partie d'une surface d'une couche pour fusionner la poudre de manière sélective et la solidariser à la couche précédente, puis la couche suivante est étalée.

La poudre est par exemple formée d'une poudre métallique.

De manière générale, une machine de fabrication additive par fusion laser fonctionne avec un plateau en alliage de fer, par exemple de type acier inoxydable.

Un tel procédé nécessite alors de créer un support spécifique entre la pièce et le plateau.

Un tel support est principalement configuré pour former une interface de détachement entre la pièce du plateau, afin de la détacher du plateau lorsqu'elle est terminée en limitant un risque de l'endommager, voire éventuellement pour supporter une partie de la pièce.

Le support forme donc une interface sacrificielle permettant de préserver l'intégrité de la pièce, ainsi que celle du plateau.

Cependant, retirer le support, non seulement du plateau mais aussi de la pièce, peut générer des difficultés, surtout pour des pièces de faibles dimensions, ce qui est fréquent en bijouterie.

En effet, une action physique avec un outil coupant ou abrasif est alors nécessaire pour retirer le support : il y a alors un risque d'endommagement de la pièce, par exemple un risque d'incidence sur ses dimensions, sa qualité ou son aspect.

Une autre difficulté liée à la fabrication additive est de pouvoir créer une surface plane sur une partie, dite inférieure, d'une pièce, en raison de l'interface entre la pièce et la poudre non fusionnée qui ne permet pas d'obtenir directement une pièce avec un état de surface propre et satisfaisant.

Dans ce contexte, un objectif de la présente invention est de faciliter cette étape de fabrication d'une pièce lorsqu'elle est réalisée au moins en partie par fabrication additive, notamment faciliter son détachement du plateau de fabrication additive, de préférence en limitant un risque pour la qualité de pièce, en menant possiblement à d'autres avantages.

A cet effet, est proposé, selon un premier aspect, un procédé de fabrication d'une pièce comportant des étapes de :
- Fourniture d'au moins une plaquette en un matériau soluble dans une substance prédéterminée ;
- Fabrication additive de la pièce, en un matériau insoluble dans la substance, sur la plaquette ; et
- Immersion de la plaquette supportant la pièce, dans la substance, durant laquelle la plaquette se dissout dans la substance.

Un tel procédé combine ainsi un procédé de fabrication additive avec un procédé chimique qui a pour but de dissoudre un élément dans un agent chimique, ici la plaquette.

Ainsi, le procédé permet de s'affranchir de réaliser un support, c'est-à-dire une interface sacrificielle entre la pièce et le plateau.

Ceci permet ainsi d'éviter d'endommager la pièce en retirant le support par une action mécanique, ce qui est particulièrement commode lorsqu'une pièce comporte au moins une partie, par exemple une paroi, très fine.

De plus, ceci permet de limiter des défauts de surface en partie inférieure de la pièce tandis que la pièce est directement fabriquée sur le plateau.

Dans le cadre de la présente invention, il est souhaité de réaliser une pièce en métal noble, c'est-à-dire réalisée à partir d'un alliage métallique d'un métal noble, en particulier en or ou en platine, voire en argent en fonction de la technologie de fabrication additive utilisée.

Un alliage de métal noble désigne ainsi ici un alliage comportant au moins un métal précieux ou noble.

Par exemple, un alliage d'or désigne un alliage comportant au moins 30% d'or, voire au moins 33,3% d'or, voire au moins 37,5% d'or, voire au moins 58,5%, voire au moins 75% d'or.

Par exemple, un alliage de platine désigne un alliage comportant au moins 90% de platine, voire au moins 95% de platine.

Pour cela, la poudre à utiliser comporte alors principalement un métal noble, notamment de l'or ou du platine, en quantités correspondantes.

Ainsi, le matériau qui est insoluble dans la substance comporte au moins un alliage de métal noble, notamment de métal précieux, en particulier de l'or ou du platine.

Ne pas fabriquer de support permet donc aussi d'économiser la quantité de matériau correspondant, ce qui est utile lorsqu'il comporte un métal noble voire précieux, comme de l'or ou du platine, et est donc de coût très élevé.

Différents couples « matériau soluble - substance » peuvent être envisagés, par exemple à base de cuivre ou d'alliage de cuivre (par exemple du laiton, bronze, maillechort...) avec de l'acide nitrique, qui offrent une facilité notable de mise en œuvre, ou encore à base d'alliage de fer (comme certains aciers) avec de l'acide chlorhydrique. Des matériaux vitreux peuvent aussi être dissout avec de l'acide fluorhydrique, mais de tels couples peuvent impliquer quelques contraintes de sécurité de mise en œuvre.

Dans un exemple de mise en œuvre, le matériau soluble dans la substance comporte du cuivre ou un alliage de cuivre.

La substance comporte alors par exemple une solution d'acide nitrique, optionnellement dilué si besoin.

Un tel couple cuivre - acide nitrique combine ainsi facilité de mise en oeuvre et coût relativement réduit.

L'acide nitrique n'a pas d'action sur un alliage d'or ou de platine, même si celui-ci comporte toutefois du cuivre. Une telle attaque chimique permet donc de séparer facilement la pièce en métal noble par rapport à la plaquette, laquelle est par exemple en cuivre ou en alliage de cuivre.

Une étape de fabrication additive concerne ici tout type de fabrication additive impliquant une utilisation d'un support, par exemple à partir d'une fusion de poudre (technologies DMLS ou SLM par exemple) ou frittage de poudre (technologie SLS par exemple), par laser par faisceau d'électrons (technologie EBM par exemple).

Dans un exemple de réalisation, l'étape de fabrication additive comporte par exemple une étape d'impression tridimensionnelle (aussi dite 3D) de la pièce.

Dans un exemple de mise en œuvre intéressant, l'étape de fabrication additive comporte une étape d'étalement sur au moins la plaquette d'une poudre du matériau insoluble dans la substance, et une étape d'irradiation par un laser d'une partie de la poudre étalée.

Dans un exemple de mise en œuvre, le procédé comporte en outre, avant l'étape d'immersion, une étape de réduction de la plaquette, autour de la pièce.

Une telle étape comporte par exemple une étape de découpage de la plaquette, autour de la pièce afin de réduire la plaquette restant sous la pièce.

C'est alors la plaquette réduite restante, supportant la pièce, qui est immergée dans la substance.

Cette étape permet de réduire la quantité de matériau soluble qui sera dissout dans la substance.

Dans un exemple de mise en œuvre, le procédé comporte, avant l'étape d'immersion, une étape de préparation d'au moins une partie de la pièce tandis que la pièce est sur la plaquette.

Au moins une partie de la pièce, par exemple une partie dite supérieure, peut ainsi être préparée avant l'attaque chimique ayant lieu durant l'étape d'immersion. De cette manière la pièce bénéficie de la présence d'au moins une partie du plateau qui forme alors un renfort.

Ceci permet par exemple de réaliser plus simplement certaines opérations courantes, par exemple de sablage, ou de polissage.

L'étape de préparation, par exemple une étape de sablage ou polissage, peut avoir lieu avant ou après l'étape de réduction de la plaquette.

Après l'étape de réduction de la plaquette restant sous la pièce, ceci réduit les risques d'abimer le polissage lors de la réduction, par exemple du découpage, de la plaquette, et la plaquette restante sous la pièce peut être plus facilement maniable par un technicien réalisant le polissage par exemple.

En outre, l'attaque chimique qui se produit pendant l'étape d'immersion n'altère pas la préparation de la surface ainsi effectuée.

Est également proposé, selon un autre aspect, une installation de fabrication d'une pièce, l'installation étant configurée pour mettre en œuvre un procédé comportant tout ou partie des caractéristiques décrites précédemment.

L'installation comporte par exemple une machine de fabrication additive comportant un plateau ayant au moins une plaquette réalisée en un matériau soluble dans une substance prédéfinie.

La machine de fabrication additive peut être configurée pour mettre en œuvre tout type de fabrication additive, comme expliqué précédemment.

Par exemple, l'installation comporte en outre un récipient contenant la substance configurée pour dissoudre la plaquette.

Différents couples « matériau soluble - substance » peuvent être envisagés.

La substance comporte par exemple en particulier un acide.

Le matériau soluble comporte par exemple du cuivre ou un alliage de cuivre (par exemple du laiton, bronze, maillechort...).

La substance comporte alors par exemple une solution d'acide nitrique.

Selon un autre exemple, le matériau soluble comporte un alliage de fer (comme certains aciers).

La substance comporte alors par exemple une solution d'acide chlorhydrique.

Selon encore un autre exemple, le matériau soluble comporte un matériau vitreux.

La substance comporte alors par exemple une solution d'acide fluorhydrique.

Une telle installation permet ainsi de procurer des avantages analogues à ceux du procédé.

Selon une option intéressante, l'installation peut également comporter un système de réduction configuré pour réduire la plaquette autour de la pièce, après l'étape de fabrication additive de la pièce.

Le système de réduction comporte par exemple un système de découpage.

Dans un exemple de réalisation, le plateau peut comporter une interface d'adaptation maintenant la plaquette et configurée pour adapter la plaquette à la machine de fabrication additive.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
la figure 1 représente schématiquement une machine de fabrication additive traditionnelle ;
la figure 2 illustre une pièce réalisée par fabrication additive traditionnelle sur un plateau, entre lesquels est formé un support ;
la figure 3 montre un plateau selon un exemple de réalisation de l'invention ;
la figure 4 représente schématiquement une étape de fourniture d'une plaquette selon un exemple de mise en œuvre de l'invention ;
la figure 5 représente schématiquement une étape de fabrication additive d'une pièce fine sur la plaquette de la figure 4 selon un exemple de mise en œuvre de l'invention ;
la figure 6 représente schématiquement une étape de réduction de la plaquette autour de la pièce selon un exemple de mise en œuvre de l'invention ;
la figure 7 illustre une étape de polissage de la pièce sur la plaquette, restante après réduction, selon un exemple de mise en œuvre de l'invention ;
la figure 8 représente schématiquement une étape d'immersion durant laquelle la plaquette soutenant la pièce se dissout ;
la figure 9 montre une face inférieure de la pièce de la figure 7 après dissolution de la plaquette ; et
la figure 10 illustre un diagramme d'étapes du procédé selon un exemple de mise en œuvre de l'invention.

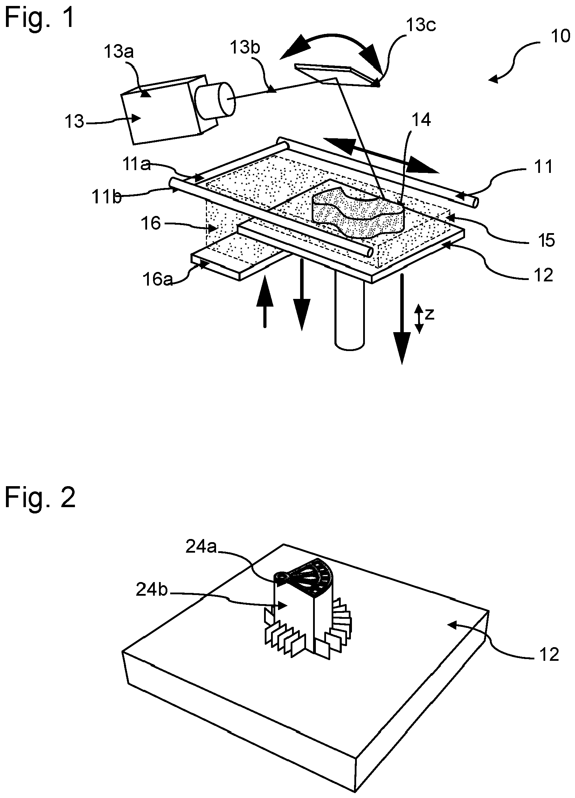

La figure 1 montre schématiquement une machine de fabrication additive 10 traditionnelle.

Une telle machine de fabrication additive 10 comporte un cadre 11 définissant une zone de travail, un plateau 12, mobile en translation, selon une direction z, par rapport au cadre 11, et un système laser 13 configuré pour irradier la zone de travail par rayon laser.

Un tel plateau 12 est généralement en alliage de fer de type acier inoxydable.

Le système laser 13 comporte par exemple une source laser 13a configurée pour émettre un faisceau laser 13b, et un système de déviation 13c configuré pour dévier et orienter le faisceau sur un point à irradier situé dans la zone de travail. Le système de déviation 13c est par exemple configuré pour permettre de balayer la zone de travail avec le faisceau laser. Dans le schéma de la figure 1, le système de déviation 13c comporte par exemple un miroir dont une orientation est commandée par un système de commande (non représenté).

Pour fabriquer une pièce 14, des couches de poudre 15 sont étalées successivement dans la zone de travail sur le plateau 12.

Dans le schéma de la figure 1, la machine de fabrication additive 10 comporte pour cela un bac 16 contenant une réserve de poudre 15, et comportant un fond 16a qui est mobile selon la direction z.

Lorsque le fond 16a remonte d'une distance déterminée selon la direction z, il fournit une certaine quantité de poudre correspondante au niveau de la zone de travail. Parallèlement, le plateau 12 descend, selon la direction z par rapport au cadre 11, d'une distance correspondant sensiblement à une épaisseur de la couche correspondante.

Pour l'étaler, le cadre 11 comporte une réglette 11a et un rail de guidage 11b. Lorsque de la poudre 15 est fournie par le bac 16 au niveau de la zone de travail, la réglette 11a coulisse le long du rail de guidage 11b à partir d'une position de départ, étale ainsi la poudre au-dessus du plateau 12, puis revient à sa position de départ, comme elle est illustrée sur la figure 1.

Ainsi, ici, le plateau 12 descend tandis que le fond 16a monte de manière à maintenir la zone de travail à une même altitude, sensiblement dans un même plan d'irradiation du faisceau laser, par exemple dans un plan de focalisation du faisceau laser.

A chaque couche, le système laser 13 fusionne la poudre de manière sélective, et permet de la solidariser d'une couche à l'autre, jusqu'à obtenir la pièce voulue.

Dans le cadre de la présente invention, il est souhaité de réaliser une pièce 14 en alliage de métal noble, en particulier de métal précieux, par exemple en or ou en platine, à partir d'un tel procédé.

Un alliage de métal noble désigne ici un alliage comportant au moins un métal précieux ou noble.

Par exemple, un alliage d'or désigne un alliage comportant au moins 30% d'or, voire au moins 33,3% d'or, voire au moins 37,5% d'or, voire au moins 58,5%, voire au moins 75% d'or.

Par exemple, un alliage de platine désigne un alliage comportant au moins 90% de platine, voire au moins 95% de platine.

Pour cela, la poudre à utiliser comporte alors un métal noble ou précieux, par exemple de l'or ou du platine.

Cependant, une fabrication d'une pièce 14 en métal noble avec un procédé traditionnel nécessite la formation d'un support, c'est-à-dire d'une interface entre la pièce et le plateau.

En outre, en bijouterie par exemple, une pièce comporte souvent au moins une partie, par exemple une paroi, de très faible épaisseur, et donc très fragile.

L'épaisseur est notamment considérée ici comme une dimension prise selon la direction z susmentionnée lorsque la pièce est réalisée sur le plateau de la machine de fabrication additive.

La figure 2 illustre une telle pièce 24a, fine de quelques dixièmes de millimètre d'épaisseur, ayant requis un support 24b, de plusieurs millimètres d'épaisseur, servant d'interface sacrificielle entre la pièce 24a et le plateau 12 ; lequel support 24b doit ensuite être retiré, sans endommager la pièce 24a.

La présente invention propose alors de fournir un plateau, notamment pour une machine de fabrication additive telle que schématisée figure 1, dont au moins une partie sur laquelle est fabriquée une pièce, désignée « plaquette », est réalisée en un matériau configuré pour être soluble dans une substance déterminée.

Un tel procédé combine ainsi un procédé de fabrication additive avec un procédé chimique qui a pour but de dissoudre un élément dans un agent chimique, ici la plaquette réalisée dans le matériau soluble.

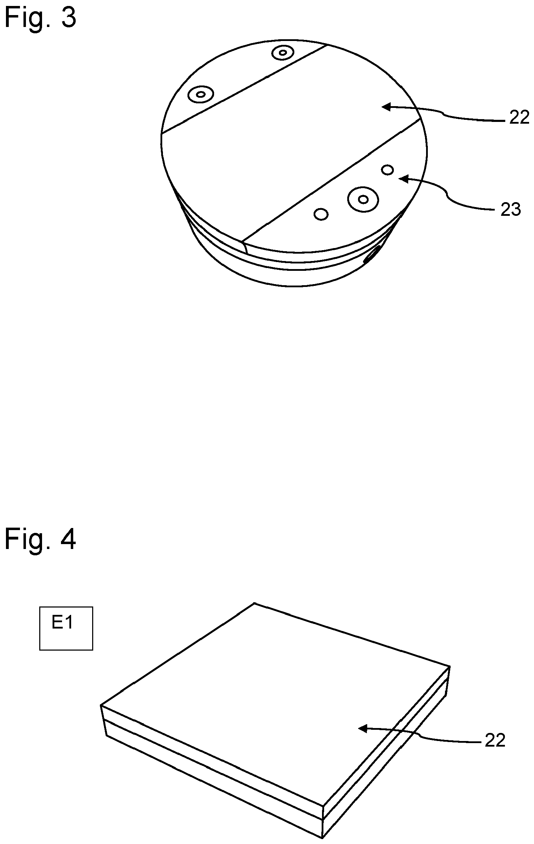

L'exemple schématisé figure 3 présente un tel plateau comportant une plaquette 22 qui est par exemple réalisée en cuivre (i.e. comportant au moins 98 %, voire au moins 99 % de cuivre).

Le cuivre est notamment soluble dans une solution d'acide nitrique.

Un tel plateau peut alors être utilisé de manière traditionnelle dans une machine de fabrication additive traditionnelle. Il comporte éventuellement une interface d'adaptation 23, maintenant la plaquette 22 et configurée pour adapter la plaquette 22 à la machine de fabrication additive voulue.

Les figures 4 à 8 illustrent un procédé de fabrication d'une telle pièce 24a selon un exemple de mise en œuvre de l'invention.

La figure 4 schématise une étape E1 de fourniture de la plaquette 22 en un matériau soluble dans une substance prédéterminée, c'est-à-dire par exemple ici en cuivre, lequel est soluble dans une solution d'acide nitrique.

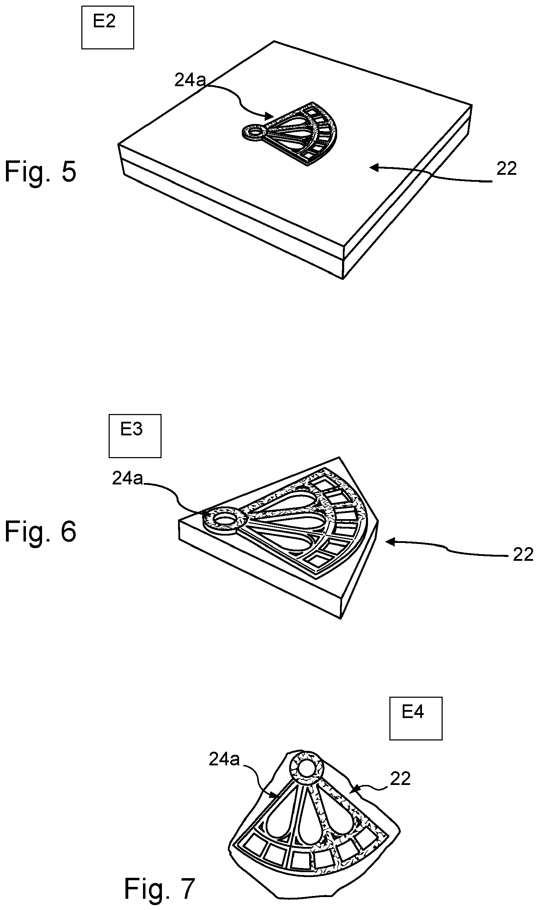

La figure 5 schématise une étape E2 de fabrication additive de la pièce 24a, directement sur la plaquette 22, comme par exemple avec un procédé d'impression 3D tel que décrit en lien avec la figure 1, sans nécessiter ici de support en guise d'interface.

La pièce 24a est alors réalisée en un matériau insoluble dans la substance considérée, ici l'acide nitrique. Elle est par exemple réalisée en métal précieux, par exemple en un alliage d'or ou de platine.

La pièce 24a, qui est par exemple un pendentif en or, a été réalisée directement sur la plaquette 22 en cuivre représentée figure 3.

Ainsi, le procédé permet de s'affranchir de réaliser un support, c'est-à-dire une interface sacrificielle entre la pièce et le plateau.

La dissolution ultérieure de la plaquette 22, et l'absence de support, permet d'éviter d'endommager la pièce en retirant le support par une action mécanique, ce qui est particulièrement commode pour une pièce possiblement fragile.

En outre, ne pas fabriquer de support permet aussi d'économiser la quantité de poudre correspondante, ce qui est utile lorsque la poudre comporte un métal précieux, comme de l'or ou du platine, de coût très élevé.

La figure 6 représente schématiquement une étape E3 de réduction de la plaquette 22 autour de la pièce 24a.

Réduire la plaquette 22 au plus près de la pièce 24a facilite un recyclage du matériau constituant la plaquette.

Par exemple ici, le cuivre est découpé et facilement trié, puis éventuellement refondu pour constituer une autre plaquette.

En parallèle, la plaquette 22 restante sous la pièce, destinée à être dissoute lors d'une étape E5 d'immersion décrite ultérieurement, est alors réduite par rapport à la plaquette initiale, ce qui permet de réduire un déchet liquide produit par l'étape E5 d'immersion.

La figure 7 illustre une étape optionnelle E4 de polissage d'au moins une partie de la pièce 24a tandis que la pièce est sur la plaquette 22.

Au moins une partie de la pièce 24a, par exemple une partie dite supérieure qui est accessible tandis que la pièce 24a est encore sur la plaquette 22, peut ainsi être préparée avant séparation de la pièce 24a et de la plaquette 22, ici durant l'attaque chimique ayant lieu durant l'étape E5 d'immersion. De cette manière la pièce 24a bénéficie de la présence d'au moins la plaquette 22 qui forme alors un renfort.

Ici, une partie de la pièce 24a représentée à gauche sur la figure est polie tandis qu'une partie à droite est encore brute, c'est-à-dire telle qu'obtenue à l'issue de l'étape E2 de fabrication additive.

L'étape E4 de polissage peut avoir lieu avant ou après l'étape E3 de réduction de la plaquette 22.

Ici, ce polissage partiel est illustré sur la plaquette déjà réduite autour de la pièce, i.e. après l'étape E3 de réduction.

Ceci réduit les risques d'abimer le polissage lors de la réduction de la plaquette, et la plaquette ainsi réduite peut être plus facilement maniable par un technicien réalisant le polissage par exemple.

En outre, l'attaque chimique qui se produit pendant l'étape E5 d'immersion n'altère pas la préparation de la surface ainsi effectuée.

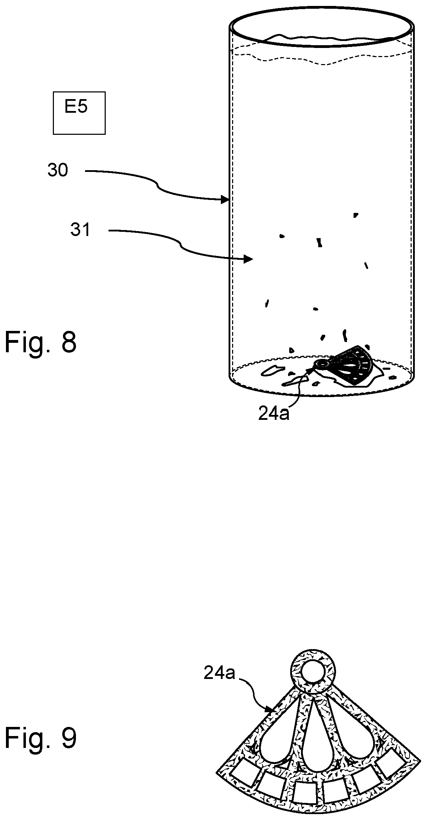

La figure 8 représente schématiquement une étape E5 d'immersion de la plaquette 22, supportant la pièce 24a, dans la substance 31, durant laquelle la plaquette 22 (en cuivre) se dissout dans la substance 31 (ici de l'acide nitrique).

La figure 9 illustre la pièce 24a obtenue après l'étape E5 d'immersion, et plus particulièrement une face inférieure de la pièce 24a qui était auparavant en contact avec la plaquette 22.

Le procédé peut ensuite comporter l'étape de polissage susmentionnée, ou une autre étape de polissage si un polissage a été réalisé avant l'étape d'immersion, au moins pour polir la face inférieure de la pièce 24a.

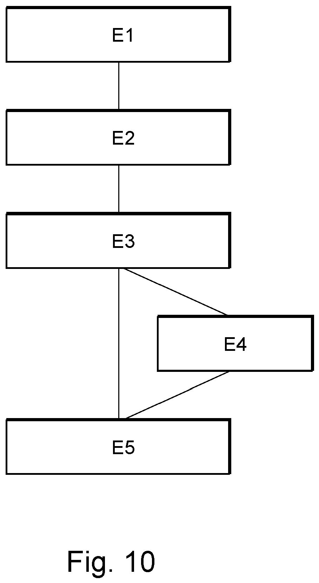

La figure 10 illustre par un diagramme-bloc le procédé selon un exemple de mise en œuvre de l'invention.

Dans cet exemple, le procédé comporte successivement :
- L'étape E1 de fourniture d'au moins la plaquette 22 ;
- L'étape E2 de fabrication additive de la pièce 24a sur la plaquette 22 ;
- L'étape E3 de réduction de la plaquette 22 autour de la pièce 24a ; et
- L'étape E5 d'immersion de la plaquette 22 soutenant la pièce 24a dans la substance 31.

Selon une option intéressante, le procédé comporte en outre ici au moins l'étape E4 de polissage, après l'étape E3 de réduction de la plaquette 22, et avant l'étape E5 d'immersion de la plaquette 22 restante sous la pièce 24a, dans la substance 31. Pour mener les étapes susmentionnées, une installation de fabrication comporte par exemple une machine de fabrication additive telle que décrite en lien avec la figure 1, et dont le plateau comporte au moins une plaquette 22 réalisée en un matériau soluble dans la substance 31 prédéfinie, i.e. par exemple en cuivre, lequel est soluble dans l'acide nitrique.

L'installation comporte alors en outre un récipient 30 contenant la substance 31 configurée pour dissoudre la plaquette 22, ici l'acide nitrique.

Un tel récipient est par exemple représenté sur la figure 8.

Ainsi, selon une option intéressante non représentée, l'installation peut également comporter un système de réduction configuré pour réduire la plaquette 22 autour de la pièce, après l'étape de fabrication additive de la pièce.

## Revendications

1. Procédé de fabrication d'une pièce (24a) comportant des étapes de :
- fourniture (E1) d'au moins une plaquette (22) en un matériau soluble dans une substance (31) prédéterminée ;
- fabrication additive (E2) de la pièce (24a), en un matériau insoluble dans la substance (31), sur la plaquette (22), le matériau insoluble dans la substance (31) comportant au moins un alliage de métal noble ; et
- immersion (E5) de la plaquette (22) supportant la pièce (24a), dans la substance (31), durant laquelle la plaquette (22) se dissout dans la substance (31).

2. Procédé selon la revendication 1 dans lequel l'étape de fabrication additive (E2) comporte une étape d'étalement sur au moins la plaquette (22) d'une poudre (15) du matériau insoluble dans la substance (31), et une étape d'irradiation par un laser d'une partie de la poudre (15) étalée.

3. Procédé selon l'une quelconque des revendications 1 ou 2 dans lequel le matériau insoluble dans la substance comporte au moins un alliage de métal précieux, en particulier de l'or ou du platine.

4. Procédé selon l'une quelconque des revendications 1 à 3 comportant, avant l'étape d'immersion (E5), une étape de réduction (E3) de la plaquette (22), autour de la pièce (24a).

5. Procédé selon l'une quelconque des revendications 1 à 4 comportant, avant l'étape d'immersion (E5), une étape de polissage (E4) d'au moins une partie de la pièce (24a) tandis que la pièce (24a) est sur la plaquette (22).

6. Installation de fabrication d'une pièce (24a) configurée pour mettre en œuvre un procédé selon l'une quelconque des revendications 1 à 5, l'installation comportant une machine de fabrication additive (10) comportant un plateau (12) ayant au moins une plaquette (22) réalisée en un matériau soluble dans une substance (31) prédéfinie, et un récipient (30) contenant la substance (31) configurée pour dissoudre la plaquette (22).

7. Installation selon la revendication 6, **caractérisée en ce que** le matériau soluble dans la substance (31) comporte du cuivre ou un alliage de cuivre.

8. Installation selon la revendication 7, **caractérisée en ce que** la substance (31) comporte une solution d'acide nitrique.

9. Installation selon l'une quelconque des revendications 4 à 8, **caractérisée en ce que** le plateau (12) comporte une interface d'adaptation (23) maintenant la plaquette (22) et configurée pour adapter la plaquette (22) à la machine de fabrication additive (10).
